(19) Europäisches Patentamt / European Patent Office / Office européen des brevets

(11) **EP 2 881 421 B1**

(12) **EUROPEAN PATENT SPECIFICATION**

(45) Date of publication and mention
of the grant of the patent:
**06.06.2018 Bulletin 2018/23**

(21) Application number: **13824772.1**

(22) Date of filing: **12.07.2013**

(51) Int Cl.:
*C08J 5/04* (2006.01)  *D04H 1/4218* (2012.01)
*D04H 1/4242* (2012.01)  *D04H 1/4326* (2012.01)
*D04H 1/4342* (2012.01)  *D04H 1/435* (2012.01)
*D04H 1/541* (2012.01)  *D04H 1/55* (2012.01)
*D04H 1/558* (2012.01)

(86) International application number:
**PCT/JP2013/069108**

(87) International publication number:
**WO 2014/021084 (06.02.2014 Gazette 2014/06)**

(54) **HEAT-RESISTANT RESIN COMPOSITE, METHOD FOR PRODUCING SAME, AND NON-WOVEN FABRIC FOR HEAT-RESISTANT RESIN COMPOSITE**

HITZEBESTÄNDIGER HARZVERBUNDSTOFF, HERSTELLUNGSVERFAHREN DAFÜR UND VLIESSTOFF FÜR EINEN HITZEBESTÄNDIGEN HARZVERBUNDSTOFF

CORPS COMPOSITE DE RÉSINE RÉSISTANT À LA CHALEUR AINSI QUE PROCÉDÉ DE FABRICATION DE CELUI-CI, ET TISSU NON TISSÉ POUR CORPS COMPOSITE DE RÉSINE RÉSISTANT À LA CHALEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.07.2012 JP 2012167884**

(43) Date of publication of application:
**10.06.2015 Bulletin 2015/24**

(73) Proprietor: **Kuraray Co., Ltd.**
**Okayama 710-0801 (JP)**

(72) Inventors:
• **ENDO, Ryokei**
**Tokyo 100-8115 (JP)**

• **WASHITAKE, Yosuke**
**Tokyo 100-8115 (JP)**

(74) Representative: **Vossius & Partner**
**Patentanwälte Rechtsanwälte mbB**
**Siebertstrasse 3**
**81675 München (DE)**

(56) References cited:
**WO-A1-91/19036       WO-A1-96/11293**
**WO-A1-99/24648       WO-A1-2013/129540**
**WO-A1-2013/129541    JP-A- S4 934 945**
**JP-A- 2008 238 493   JP-A- 2011 190 549**
**US-A- 4 281 042      US-A1- 2004 039 096**
**US-A1- 2012 065 283**

## Description

CROSS REFERENCE TO THE RELATED APPLICATIONS

FIELD OF THE INVENTION

The present invention relates to a heat-resistant resin composite having good mechanical properties and heat resistance and a method for producing the heat-resistant resin composite, as well as relates to a non-woven fabric for the heat-resistant resin composite, the non-woven fabric being advantageously used for producing the heat-resistant resin composite. Furthermore, the present invention also relates a heat-resistant resin composite having excellent heat resistance, flame resistance, dimensional stability, and/or processability. Such heat-resistant resin composites can be effectively used in general industrial material fields, electric and electronic fields, civil engineering and construction fields, aircraft, automotive, rail, and marine fields, agricultural material fields, optical material fields, and medical material fields, in particular in applications to be frequently exposed to high temperature environments.

BACKGROUND ART

Fiber-reinforced resin composite comprising a thermoplastic resin and reinforcing fibers such as carbon fibers or glass fibers is lightweight, and good in terms of specific strength and specific stiffness, and is widely used in electrical and electronic applications, civil engineering and construction applications, automotive applications, aircraft applications, and others. In order to enhance mechanical properties, some fiber-reinforced resin composites incorporate reinforcing fibers in continuous fiber form. However, such continuous fibers are poor in shaping capability, and sometimes make it difficult to manufacture a fiber-reinforced resin composite which has a complicated shape. Accordingly, Patent Document 1 (Japanese Laid-Open Patent Publication No. 61-130345) and Patent Document 2 (Japanese Laid-Open Patent Publication No. 6-107808) have proposed to produce a fiber-reinforced resin composite having a complicated shape by using reinforcing fibers having a discontinuous fiber form.

In recent years, from growing social awareness regarding safety and security of products, a demand required for heat-resistant material has been also increased.

In view of such awareness, Patent Document 3 (Japanese Examined Patent Publication No. 3-25537) discloses a method for producing a heat-resistant non-woven fabric comprising: forming a web by blending heat-resistant fibers and undrawn polyphenylene sulfide fibers in a weight ratio of (former: latter) as 92:8 to 20:80; and heat-compressing the web at a temperature that makes the undrawn fibers to be plasticized to cause a fusion activity under pressure to form a heat-resistant non-woven fabric.

Further, Patent Document 4 (International Publication No. WO2007/097436) discloses a molding material comprising 20 to 65 wt% of thermoplastic resin fibers such as nylon 6 fibers and polypropylene fibers, and 35 to 80 wt% carbon fibers, wherein both the carbon fibers and the thermoplastic fibers are in the state of single fibers; and the carbon fibers have a weight average fiber length (Lw) in a range between 1 and 15 mm, and an orientation parameter (fp) in a range between -0.25 and 0.25.

Further, Patent Document 5 (Japanese Laid-Open Patent Publication No. 2006-524755) discloses a fiber composite made from a non-woven mat, the mat including at least one first fiber as a fusible fiber made of a high performance thermoplastic material, at least one second reinforcing fiber comprising a high performance material having a greater temperature stability than that of the fusible fiber, and a PVA binder.

RELATED ART DOCUMENT

PATENT DOCUMENT

[Patent Document 1] Japanese Laid-Open Patent Publication No. 61-130345
[Patent Document 2] Japanese Laid-Open Patent Publication No. 6-107808
[Patent Document 3] Japanese Examined Patent Publication No. 3-25537
[Patent Document 4] International Publication No. WO2007/097436
[Patent Document 5] Japanese Laid-Open Patent Publication No. 2006-524755

## SUMMARY OF THE INVENTION

## PROBLEMS TO BE RESOLVED BY THE INVENTION

However, all of the polyphenylene sulfide fibers, nylon 6 fibers, and polypropylene fibers used in Patent Document 3 or Patent Document 4 have glass transition temperatures of lower than 100°C. Since the glass transition temperature is a temperature at which micro-Brownian motion of polymer chains begins, when these polymers are subjected to a temperature exceeding the glass transition temperature thereof, molecules in amorphous parts of these polymers start moving. Accordingly, due to drastically change in physical properties of these polymers at a temperature 100°C or over, usage of these polymers under such high temperatures is limited.

Further, although Example of Patent Document 5 gives a fiber composite material produced from a non-woven mat comprising PPS (polyphenylene sulfide) fibers, carbon fibers and PVA binder fibers, at a compression temperature of 350°C, since the glass transition temperature of the polyphenylene sulfide fibers is lower than 100°C as described above, the practical use of the fiber composite material is also limited.

In view of the foregoing, an object of the present invention is to provide a heat-resistant resin composite being capable of having good mechanical properties, even after high temperatures are encountered during the forming process for producing the heat-resistant resin composite.

Another object of the present invention is, in addition to the above object, to provide a heat-resistant resin composite offering heat resistance that makes it possible to be used under high temperatures as well as having durability under working temperatures.

A further object of the present invention is to provide a method for producing such a heat-resistant resin composite in an efficient way, and to provide a non-woven fabric which can be suitably used for the production of the heat-resistant resin composite.

## MEANS OF SOLVING THE PROBLEMS

As a result of intensive studies to obtain a heat-resistant resin composite as described above, inventors of the present invention have found that it is necessary for thermoplastic fibers forming a matrix by heat-fusion of the fibers to have a glass transition temperature of 100°C or higher in order to obtain a shaped or molded article having high heat resistance in practical use.

On the other hand, when a resin composite is formed or molded by using heat-fusion of heat-resistant thermoplastic fibers, the heat-fusion of thermoplastic fibers having such heat-resistant property needs to be processed at very high temperatures. In such a case, for example, the PVA binder fibers used in Example of Patent Document 5 inevitably cause thermal decomposition under such high temperatures. Accordingly the inventors have found a new problem that the mechanical properties of thus obtained composite materials comprising the PVA binder fibers are deteriorated.

As the results of further investigation, the inventors of the present invention found that by thermo-forming (or heat-molding) one or more non-woven fabrics each comprising a specific heat-resistant thermoplastic fiber and a reinforcing fiber in combination with a specific binder fiber, thus obtained shaped or molded article enables to prevent deterioration in the mechanical properties of the product even when the article is exposed to high temperatures; and further found that such combinations can make heat resistance of the article to be improved during use of the article; thereby completing the present invention.

That is, a first aspect of the present invention is a non-woven fabric used for producing a heat-resistant resin composite, wherein

the non-woven fabric comprises a heat-resistant thermoplastic fiber, a reinforcing fiber, and a polyester-based binder fiber to bind other fibers;

the heat-resistant thermoplastic fiber has a glass transition temperature of 100°C or higher, an average fineness of 0.1 to 10 dtex, and an average fiber length of 0.5 to 60 mm;

the polyester-based binder fiber comprises a polyester-based polymer comprising a terephthalic acid unit (A) and an isophthalic acid unit (B) in a copolymerization ratio (molar ratio) of (A)/(B) = 90/10 to 40/60; and

the proportion of the heat-resistant thermoplastic fiber in the non-woven fabric is from 30 to 80 wt%.

The polyester-based binder fiber may have a crystallinity of 50% or less. Moreover, a ratio (by weight) of the heat-resistant thermoplastic fiber with respect to the polyester-based binder fiber in the heat-resistant resin composite may be (former/latter) = 60/40 to 99/1.

The heat-resistant thermoplastic fiber may be an undrawn fiber being substantially undrawn after spinning. The heat resistant thermoplastic fiber may include at least one member selected from the group consisting of a polyetherimide-based fiber, a semi-aromatic polyamide-based fiber, a polyether ether ketone-based fiber, and a polycarbonate-based fiber.

The reinforcing fiber may comprise at least one member selected from the group consisting of a carbon fiber, a glass fiber, a wholly aromatic polyester fiber, and a para-aramid fiber.

The non-woven fabric may, for example, have a basis weight of 5 to 1500 g/m$^2$.

A second aspect of the present invention is a method for producing a heat-resistant resin composite at least comprising:

preparing one or more the above-described non-woven fabrics to be overlaid with each other, and
thermo-compressing the one or more of the non-woven fabrics at a temperature of equal to or higher than a flow starting temperature of the heat-resistant thermoplastic fiber to carry out thermo-forming.

A third aspect of the present invention is a heat-resistant resin composite comprising a matrix resin and reinforcing fibers dispersed in the matrix resin, wherein
the matrix resin comprises a heat-resistant thermoplastic polymer and a polyester-based polymer, the heat-resistant thermoplastic polymer having a glass transition temperature of 100°C or higher, and the polyester-based polymer comprising a terephthalic acid unit (A) and an isophthalic acid unit (B) in a copolymerization ratio (molar ratio) of (A)/(B) = 100/0 to 40/60; and
the heat-resistant resin composite comprises the heat-resistant thermoplastic polymer in a proportion of 30 to 80 wt% based on the composite.

The heat-resistant resin composite may, for example, have a bending strength at 24°C of at 150 MPa or greater, and a retention percentage of a bending strength of the composite at 100°C with respect to that at 24°C is equal to or greater than 70%. The heat-resistant resin composite may, for example, have a bending elastic modulus at 24°C of 5 GPa or greater, and a retention percentage of a bending elastic modulus thereof at 100°C with respect to that at 24°C is equal to or greater than 70%.

The heat-resistant resin composite may have a density of 2.00 g/cm$^3$ or less, and a thickness of 0.3 mm or greater.

The present invention encompasses any combination of at least two features disclosed in the claims and/or the specification. In particular, the present invention encompasses any combination of at least two claims.

EFFECT OF THE INVENTION

According to an aspect of the present invention, it is possible to provide a heat-resistant resin composite having good mechanical properties as well as heat resistance, and be applicable in applications in which particularly high temperature environments are encountered in many opportunities. Further it is possible to produce a heat-resistant resin composite according to the present invention, without requiring specific heat molding process but with ordinal thermo-forming process such as compression molding or GMT molding at reduced cost. Such a heat-resistant resin composite can have a shape designed freely depending on purposes, and can be advantageously used in many applications, including general industrial materials fields; electrical and electronic fields; civil engineering and construction fields; aircraft, automotive, rail, and marine fields; agricultural material fields; optical material fields; medical material fields; and others.

DETAILED DESCRIPTION OF THE INVENTION

Hereinafter, the present invention will be described in detail. A first embodiment of the present invention is a non-woven fabric which is used to produce a heat-resistant resin composite and includes a heat-resistant thermoplastic fiber, a reinforcing fiber and a polyester binder fiber to bind other fibers.

(Heat-resistant thermoplastic fiber)

The heat-resistant thermoplastic fiber used in the present invention has a glass transition temperature of 100°C or higher because of their higher heat resistance, while the heat-resistant thermoplastic fiber is also capable of melting and/or flowing by heating at an increased temperature because the fiber is a thermoplastic fiber. In general, it is well known that mechanical properties of polymers drop largely at a glass transition temperature thereof at which polymer molecules in amorphous portions start to move. For example, even thermoplastic fibers having a melting point of 200°C or higher, such as polyethylene terephthalate (PET) fibers and nylon 6 fibers, cannot be regarded as having good heat resistance because the mechanical properties of these fibers would be depressed significantly at a glass transition temperature of around 60 to 80°C. Thus, when a resin composite is obtained by using thermoplastic fibers having a glass transition temperature of lower than 100°C, it is hard to say that such a resin composite has high heat resistance, resulting in limited practical use. The heat-resistant thermoplastic fiber used in the present invention have a glass transition temperature of preferably 105°C or higher, and more preferably 110°C or higher. It should be noted that an upper limit of the glass transition temperature of the heat-resistant thermoplastic fibers can be suitably determined according to the type of the fibers, and may be about 200°C from the viewpoint of moldability.

It should be noted that the glass transition temperature referred to in the present invention is determined by recording change in loss tangent (tanδ) dependent on temperatures measured in an elevating temperature of 10°C/min. at a frequency of 10 Hz using solid dynamic viscoelasticity analyzer "Rheospectra DVE-V4" manufactured by Rheology. Co., Ltd., and evaluating a temperature at the peak tanδ. Here, the temperature at peak tanδ means a temperature at which primary differential value of the tanδ variation by temperature is zero.

The heat-resistant thermoplastic fiber used in the present invention is not limited to a specific one as long as the heat-resistant thermoplastic fiber has a glass transition temperature of 100°C or higher. The heat-resistant thermoplastic fiber may be used singly or in combination of two or more. Examples of the heat-resistant thermoplastic fibers may include, for example, a fluorine-containing fiber such as a polytetrafluoroethylene-based fiber; a polyimide-based fiber such as a semi-aromatic polyimide-based fiber, a polyamide-imide-based fiber, a polyetherimide-based fiber; a polysulfone-based fiber such as a polysulfone-based fiber, a polyether sulfone-based fiber; a semi-aromatic polyamide-based fiber; a polyether ketone-based fiber such as a polyether ketone-based fiber, a polyether ether ketone-based fiber, a polyether ketone ketone-based fiber; a polycarbonate-based fiber; a polyarylate-based fiber; a wholly aromatic polyester-based fiber; and the like. Among them, from the viewpoint of mechanical properties, flame resistance, heat resistance, moldability, and/or easy availability, polyetherimide-based fibers, semi-aromatic polyamide-based fibers, polyether ether ketone-based fibers, polycarbonate-based fibers and the like are suitably used. In view of dimensional stability, semi-aromatic polyamide-based fibers, wholly aromatic polyester-based fibers, polysulfone-based fibers, and polycarbonate-based fibers are preferably used.

In the range without impairing the effect of the present invention, the heat-resistant thermoplastic fibers used in the present invention may include an antioxidant, an antistatic agent, a radical inhibitor, a matting agent, an ultraviolet absorber, a flame retardant, various inorganic substances, and others. Specific examples of the inorganic substances may include a carbon material such as a carbon nanotube, a fullerene, a carbon black, a graphite and a silicon carbide; a silicate material such as a talc, a wollastonite, a zeolite, a sericite, a mica, a kaolin, a clay, a pyrophyllite, a silica, a bentonite, and an alumina silicate; a metal oxide such as a ceramic bead, a silicon oxide, a magnesium oxide, an alumina, a zirconium oxide, a titanium oxide and an iron oxide; a carbonate such as a calcium carbonate, a magnesium carbonate and a dolomite; a sulfate such as a calcium sulfate and a barium sulfate; a hydroxide such as a calcium hydroxide, a magnesium hydroxide, and an aluminum hydroxide; a glass such as a glass bead, a glass flake, and a glass powder; a ceramic bead; a boron nitride; and others.

The production process of heat-resistant thermoplastic fibers used in the present invention is not particularly limited to a specific one as long as it is possible to offer a fiber form, and can be carried out using a melt spinning apparatus known in the art. That is, the heat-resistant thermoplastic fibers can be obtained by melt-kneading at least thermoplastic polymer powders or pellets using a melt extruder, leading the molten polymer to a spinning cylinder to be weighed with a gear pump and extruded from a spinneret, and winding the extruded filaments (or yarns). The taken-up speed at that time of winding is not particularly limited to a specific one. From the viewpoint of reducing molecular orientation occurrence in the spinning line, the taken-up speed may be preferably in a range of between 500 m/min. and 4000 m/min.

The heat-resistant thermoplastic fiber according to the present invention may be preferably an undrawn fiber which is substantially not subjected to drawing, in order to improve processability of the heat-resistant resin composite in the manufacturing process as well as the dimensional stability and appearance of the resin composite to be obtained.

It should be noted that the term "drawing" means a step of drawing quenched filaments after melt-spinning using a drawing means such as rollers, and does not include a step in which molten filaments discharged from spinneret are extended when winding.

The heat-resistant thermoplastic fibers used in the present invention essentially have an average fineness of single fibers of 0.1 to 15 dtex. In order to obtain a heat-resistant resin composite having excellent mechanical properties, the non-woven fabric used as a precursor preferably has reinforcing fibers dispersed homogeneously with heat-resistant thermoplastic fibers.

The heat-resistant thermoplastic fibers having a smaller average fineness make it possible to increase the number of heat-resistant thermoplastic fibers constituting the non-woven fabric so as for reinforcing fibers to be more uniformly dispersed. However, the heat-resistant thermoplastic fibers having an average fineness of smaller than 0.1 dtex may be incapable of dispersing the reinforcing fibers uniformly because such thin fibers may entangle with each other in the non-woven manufacturing process. Further, in particular when manufacturing a non-woven fabric by a wet papermaking, there is a possibility that such thin fibers may deteriorate processability significantly, for example, may make water leakiness (or drainage) deteriorated during the process. On the other hand, when the heat-resistant thermoplastic fibers have an average fineness of exceeding 15 dtex, there is a possibility that the number of heat-resistant thermoplastic fibers constituting a non-woven fabric is too small, resulting in difficulty in uniform dispersion of reinforcing fibers. The average fineness of the heat-resistant thermoplastic fibers is preferably from 0.1 to 10 dtex, more preferably from 0.2 to 9 dtex, and further preferably from 0.3 to 8 dtex (e.g., 0.3 to 5 dtex).

The heat-resistant thermoplastic fibers used in the present invention essentially have an average fiber length of single fibers of 0.5 to 60 mm. The heat-resistant thermoplastic fibers having an average fiber length of less than 0.5 mm are not preferable because such fibers may make the processability for producing non-woven fabric to be significantly deteriorated. For example, the fibers may be disassociated from the non-woven fabric during the non-woven fabric production process, or when producing a non-woven fabric by a wet papermaking process, such fibers may worse the water leakiness during the process. The heat-resistant thermoplastic fibers having an average fiber length of greater than 60 mm are not preferable because such fibers may entangle to be locked with each other in the non-woven manufacturing process, resulting in difficulty in uniform dispersion of reinforcing fibers. The heat-resistant thermoplastic fibers preferably have an average fiber length of 1 to 55 mm, and more preferably 3 to 50 mm. It should be noted that cross-sectional shapes of the fibers are not particularly limited to a specific one, they may be circular, or atypical shapes such as hollow, flat, polygonal, T-shape, L-shape, I-shape, cruciform, multiple-leaves-shape, star-shape, and others.

(Reinforcing fiber)

The reinforcing fiber used in the present invention is not particularly limited to a specific one as long as it does not impair the effect of the present invention. The reinforcing fiber may be an organic fiber and/or an inorganic fiber, and can be used singly or in combination of two or more. Examples of inorganic fibers may include a glass fiber, a carbon fiber, a silicon carbide fiber, an alumina fiber, a ceramic fiber, a basalt fiber, various metal fibers (e.g., fibers of gold, silver, copper, iron, nickel, titanium, stainless steel, etc.), and the like. Examples of organic fibers may include a wholly aromatic polyester-based fiber, a polyphenylene-based sulfide fiber, a para-aramid fiber, a polysulfone amide-based fiber, a phenol resin-based fiber, a wholly aromatic polyimide-based fiber, a fluorine-containing fiber, and the like. It should be noted that the organic fiber may be a drawn fiber to be subjected to drawing step if necessary.

When the organic fibers used as reinforcing fibers are thermoplastic fibers, such organic fibers may preferably have a flow starting temperature of higher than the flow starting temperature of the heat-resistant thermoplastic fibers.

Among these reinforcing fibers, from the viewpoint of mechanical properties, flame retardancy, heat resistance, and easy availability, preferable reinforcing fibers include a carbon fiber, a glass fiber, a wholly aromatic polyester-based fiber, and a para-aramid fiber.

The average fineness of single fibers of the reinforcing fibers used in the present invention can be appropriately set within a range that can be suitably dispersed with respect to the heat-resistant thermoplastic fibers, and for example, may be preferably 10 to 0.01 dtex, preferably 8 to 0.1 dtex, and more preferably 6 to 1 dtex.

The average fiber length of single fibers of the reinforcing fibers used in the present invention may be set appropriately according to the strength of the composite to be required, and, for example, may be 1 to 40 mm, preferably 5 to 35 mm, and more preferably 10 to 30 mm.

It should be noted that cross-sectional shapes of the fibers are not particularly limited to a specific one, they may be circular, or atypical shapes such as hollow, flat, polygonal, T-shape, L-shape, I-shape, cruciform, multiple-leaves-shape, star-shape, and others.

(Polyester-based binder fiber)

The polyester-based binder fiber used in the present invention, in combination with heat-resistant thermoplastic fibers, can improve dispersion of heat-resistant thermoplastic fibers and reinforcing fibers in the non-woven fabric. Further, when the non-woven fabric is formed into a resin composite, the polyester-based binder fibers can exert heat resistance property to the resin composite without impairing heat resistance property exerted by the heat resistance thermoplastic resin.

Polyester-based binder fibers comprise a polyester-based polymer comprising a terephthalic acid unit (A) and an isophthalic acid unit (B) in a copolymerization ratio (molar ratio) of (A)/(B) = 90/10 to 40/60. By using such a polyester-based polymer, it is possible not only to achieve good binder properties but also to suppress the thermal degradation during thermo-forming or molding process at a high temperature. The copolymerization ratio (molar ratio) may be more preferably (A)/(B) = 90/10 to 45/55, and further preferably (A)/(B) = 85/15 to 50/50.

In the degree that effect of the present invention is not deteriorated, the polyester-based polymer may comprise a small amount of a dicarboxylic acid unit, other than terephthalic acid unit and isophthalic acid unit, singly or in combination of two or more. Examples of other dicarboxylic acid units may include units of aromatic dicarboxylic acids such as naphthalene dicarboxylic acid, diphenyl sulfone dicarboxylic acid, benzophenone dicarboxylic acid, 4,4'-diphenyl dicarboxylic acid, and 3,3'-diphenyl dicarboxylic acid; aliphatic dicarboxylic acids such as adipic acid, succinic acid, azelaic acid, sebacic acid, and dodecane dioic acid; alicyclic dicarboxylic acids such as hexahydroterephthalic acid and 1,3-adamantane dicarboxylic acid; and others.

The diol units constituting the polyester-based polymer may be ethylene glycol to be used as a diol unit. Further, a diol unit other than ethylene glycol may include units of aromatic diols such as chloro-hydroquinone, 4,4'-dihydroxybiphenyl, 4,4'-dihydroxydiphenylsulfone, 4,4'-dihydroxydiphenyl sulfide, 4,4'-dihydroxybenzophenone, p-xylene glycol; aliphatic diols such as diethylene glycol, propanediol, butanediol, hexanediol and neopentyl glycol; alicyclic diols such as cyclohexanedimethanol; and others. These diol units can be used singly or in combination of two or more.

The manufacturing method of a polyester-based polymer constituting the polyester-based binder fibers used in the present invention is not particularly limited to a specific one. The polyester-based polymer may be produced with known methods. That is, the polyester-based polymer can be produced by a method of melt polymerization via trans-esterification starting from a dicarboxylic acid component and a diol component; a method of melt polymerization after direct esterification of a dicarboxylic acid component and a diol component; or others.

Intrinsic viscosity of the polyester-based polymer constituting the polyester-based binder fiber used in the present invention is not particularly limited to a specific one. The intrinsic viscosity of the polyester-based polymer may be, for example in a range between 0.4 and 1.5, preferably between 0.6 and 1.3 from the viewpoint of mechanical properties, processability and cost efficiency of the obtained fibers. Here the intrinsic viscosity is a viscosity determined from a viscosity of a solution containing a polymer dissolved in a mixed solution of phenol/tetrachloroethane (weight ratio 1/1) measured at 30°C, and is expressed as "$\eta$".

By melt spinning thus-obtained polyester-based polymer according to a conventional or known method, it is possible to obtain a polyester-based binder fiber. In melt-spinning, polyester-based polymer molten by heating is extruded from a spinneret having small holes into air, then the extruded streams of molten polymer are attenuated to be quenched and solidified to give spun filaments. Then the spun filaments are taken up at a constant speed to obtain filaments.

Further, from a viewpoint to exhibit good binder performance, such polyester-based binder fibers used in the present invention may have a degree of crystallinity of, for example, 50% or less, preferably 45% or less, and more preferably 40% or less. The degree of crystallinity can be set to a predetermined value by adjusting a copolymerization ratio of the dicarboxylic acid units, a drawing ratio in fiber production process, and others. From the viewpoint of forming of heat-resistant resin composites, it should be noted that the degree of crystallinity of the polyester-based binder fiber may be 5% or greater.

The single fiber fineness of the polyester-based binder fiber used in the present invention is not particularly limited to a specific one. The polyester-based binder fiber having an average fineness of, for example, 0.1 to 50 dtex, and preferably of 0.5 to 20 dtex may be widely available. Fineness of fibers may be appropriately set by adjusting the spinneret hole diameter and the discharge amount of the polymer.

The average fiber length of the single fiber of the polyester-based binder fiber used in the present invention may be set appropriately according to the strength of the composite to be required. The polyester-based binder fiber may have an average fiber length of, for example, 1 to 40 mm, preferably 5 to 35 mm, and more preferably 10 to 30 mm.

The cross-sectional shapes of the polyester-based binder fibers are not particularly limited to a specific one, they may be circular, or atypical cross-sectional shapes such as hollow, flat, polygonal, T-shape, L-shape, I-shape, cruciform, multiple-leaves-shape, star-shape, and others.

Further, as long as polyester-based binder fibers can be used to constitute heat-resistant resin composites, if necessary, the polyester-based binder fiber may be a conjugated fiber such as a core-sheath fiber, a sea-island fiber, a side-by-side fiber. In the conjugated fiber, the polyester polymer which exerts fusing property may have a given degree of crystallinity.

(Non-woven fabric)

The non-woven fabric according to the present invention is a porous sheet in which discontinuous fibers are entangled and bonded with each other in a three-dimensional structure, and at least includes a heat-resistant thermoplastic fiber, a reinforcing fibers, and a polyester-based binder fiber to bind or bond the heat-resistant thermoplastic fiber and reinforcing fiber.

The proportion of heat-resistant thermoplastic fiber in the non-woven fabric used in the present invention is essentially from 30 to 80 wt%. If the proportion of the heat-resistant thermoplastic fiber is less than 30 wt%, the reinforcing fibers cannot be uniformly dispersed in the non-woven fabric. The resin composite obtained by thermo-forming such a non-woven fabric has not only a deteriorated appearance, but also low mechanical properties. On the other hand, if the proportion of heat-resistant thermoplastic fiber is more than 80 wt%, the amount of the reinforcing fibers to be incorporated becomes too small, resulting in obtaining a resin composite having insufficient mechanical properties. The proportion of the heat-resistant thermoplastic fiber is preferably 35 to 75 wt%, and more preferably 40 to 70 wt%.

The ratio (weight ratio) of heat-resistant thermoplastic fiber and reinforcing fiber in a non-woven fabric may be (former/latter) = 30/70 to 85/15. The ratio may be preferably (former/latter) = 35/65 to 75/25, and more preferably 40/60 to 70/30.

The ratio (weight ratio) of heat-resistant thermoplastic fiber and polyester-based binder fiber in a non-woven fabric may be, for example, in a range of (former/latter) = 60/40 to 99/1. The ratio may be preferably 70/30 to 99/1, and more preferably 80/20 to 99/1.

Further, in the non-woven fabric, the ratio (weight ratio) of the total amount of heat-resistant thermoplastic fiber and reinforcing fiber with respective to the polyester-based binder fiber may be in a range of (former/latter) = 85/15 to 99/1. The ratio may be preferably 88/12 to 99/1, and more preferably 90/10 to 99/1.

The combination of heat-resistant thermoplastic fiber and polyester-based binder fiber in a specific ratio as described above can advantageously prevent a resin composite from deterioration of mechanical properties in the step of thermo-compressing the non-woven fabric. Further, such a resin composite can retain mechanical properties even when the resin composite is exposed to high temperature.

There is no particular limitation to the manufacturing method of the non-woven fabric according to the present invention, there may be mentioned known or conventional methods for producing non-woven fabrics such as spun lace non-woven fabric, needle punch non-woven fabric, steam jet non-woven fabric, as well as a dry papermaking method, a wet papermaking method and the like. Among them, in terms of production efficiency and uniform dispersion of reinforcing fibers in the non-woven fabric, a wet papermaking method is preferred. For example, a wet papermaking process comprises preparing an aqueous slurry comprising at least the heat-resistant thermoplastic fiber, the reinforcing fiber, and the polyester-based binder fiber, and then subjecting the slurry to an ordinal papermaking process for sheet formation.

In the papermaking process, drying under heat for drying the slurry is carried out. The heating temperature for drying is equal to or higher than a softening point of the polyester-based binder fiber. In this drying step, polyester-based binder fibers in the slurry thermally adhere to heat-resistant thermoplastic fibers and reinforcing fibers to form a non-woven fabric having a paper shape or a web shape.

Further, when producing a non-woven fabric, it is preferable to carry out thermal bonding step such as hot pressing and through-air bonding to a web once obtained in order to improve adhesion property of the polyester-based binder fibers.

Further, in order to enhance the uniformity and/or the pressure-bonding property of the non-woven fabric, a binder may be applied by spray drying.

The basis weight of the non-woven fabric used in the present invention may be preferably from 5 to 1500 g/m$^2$, more preferably from 6 to 1400 g/m$^2$, and further preferably from 7 to 1300 g/m$^2$. If the basis weight is too small or too large, there is a risk that uniform texture may not be achieved as well as that the processability of the non-woven fabric may be deteriorated.

(Method of producing heat-resistant resin composite)

The producing method of the heat resistant resin composite according to the present invention at least comprises preparing one or more non-woven fabrics, i.e., a single non-woven fabric or a plurality of the non-woven fabrics, to be overlaid with each other, and thermo-compressing the one or more non-woven fabrics at a temperature of equal to or higher than a flow starting temperature of the heat-resistant thermoplastic fiber to carry out thermo-forming. It should be noted that the non-woven fabric may be used as a plurality of non-woven fabrics of the same type, or may be used as a plurality of non-woven fabrics in combination of different types.

Here, the flow starting temperature means a melting point as for crystalline resins, or alternatively a glass transition temperature as for non-crystalline resins.

No particular limitation is imposed on the thermo-forming process, general compression molding or forming methods such as stampable molding, pressure molding, vacuum compression molding, or GMT molding are preferably used. The thermo-forming or molding temperature to be used may be set according to the flow starting temperature or the decomposition temperature of the heat-resistant thermoplastic fiber. For example, if heat-resistant thermoplastic fibers are crystalline, the thermo-forming or molding temperature may be preferably in a range between equal to or higher than the melting point of the heat-resistant thermoplastic fibers and equal to or lower than (melting point + 100)°C. Alternatively, if the heat-resistant thermoplastic fibers are non-crystalline, the thermo-forming or molding temperature may be preferably in a range between equal to or higher than the glass transition temperature of the heat-resistant thermoplastic fibers and equal to or lower than (glass transition temperature + 200)°C. If necessary, it is also possible to carry out pre-heat by using, for example, an IR heater or the like before thermo-forming.

No particular limitation is imposed on the pressure during the thermo-forming, and thermo-forming is generally carried out at a pressure of 0.05 N/mm$^2$ or higher (e.g., 0.05 to 15 N/mm$^2$). No particular limitation is imposed on the time during the thermo-forming, and since there is a possibility that the heated polymer is degraded when exposed to high temperatures for a long time, the preferable time to be heated is usually 30 minutes or less. Further, the thickness and the density of the heat-resistant resin composite material to be obtained can be suitably determined in accordance with type of reinforcing fibers and/or pressure to be applied. No particular limitation is imposed on the shape of the heat-resistant resin composite to be obtained, and can be suitably set. Depending on purpose, it is possible to carry out thermo-forming after placing a plurality of non-woven fabrics having different specifications together, or after placing a plurality of non-woven fabrics having different specifications separately into a mold having a predetermined size. In some cases, it is also possible to form a heat-resistant resin composite in combination with other reinforcing fiber textile(s) and/or resin composite. Depending on purpose, it is also possible to carry out another thermo-forming of the heat-resistant resin composite obtained.

Since thus obtained heat-resistant resin composite is thermo-formed by using as a precursor one or more non-woven fabrics each comprising thermoplastic fibers and reinforcing fibers, such a heat-resistant resin composite can include longer reinforcing fibers at a high content and also can make the reinforcing fibers to be placed randomly in the heat-resistant resin composite so as to be excellent in mechanical properties as well as isotropic property. It is also possible to achieve excellent shaping capability by carrying out thermo-forming of the non-woven fabric.

(Heat-resistant resin composite)

The heat-resistant resin composite according to the present invention is a heat-resistant resin composite which comprises a matrix resin, and reinforcing fibers dispersed in the matrix resin, wherein
the matrix resin comprises a heat-resistant thermoplastic polymer and a polyester-based polymer, the heat-resistant thermoplastic polymer having a glass transition temperature of 100°C or higher, and the polyester-based polymer comprising a terephthalic acid unit (A) and an isophthalic acid unit (B) in a copolymerization ratio (molar ratio) of (A)/(B) = 100/0 to 40/60; and
the heat-resistant resin composite comprises the heat-resistant thermoplastic polymer in a proportion of 30 to 80 wt% based on the composite.

The heat-resistant resin composite obtained as described above may have a bending strength (flexural strength) at 24°C, for example, of 150 MPa or higher, preferably 160 MPa or higher and more preferably 170 MPa or higher.

Further, the heat-resistant resin composite may have a bending elastic modulus (flexural modulus) at 24°C, for example, of 5 GPa or higher, preferably 5.5 GPa or higher, and more preferably 6 GPa or higher.

The heat-resistant resin composite may have a retention percentage of bending strength of the composite at 100°C with respect to that of 24°C of equal to or greater than 70%, and may have a retention percentage of bending elastic modulus of the composite at 100°C with respect to that at 24°C of equal to or greater than 70%. When the resin composite has either one of the percent retention of bending strength and bending elastic modulus of lower than 70%, such a resin composite cannot be regarded as having a satisfactory heat resistant property. The percent retention of both bending strength and bending elastic modulus may be preferably 74% or higher, and more preferably 78% or higher.

The heat-resistant resin composite according to the present invention preferably has a density of 2.00 g/cm$^3$ or lower. When the heat-resistant resin composite has a density of greater than 2.00 g/m$^3$, the heat-resistant resin composite cannot contribute to weight reduction, resulting in limited usage in some cases. The heat-resistant resin composite according to the present invention may preferably have a density of 1.95 g/cm$^3$ or lower, and more preferably 1.90 g/cm$^3$ or lower. The lower limit of density can be determined as appropriate depending on the choice of materials and others, for example, may be about 0.5 g/cm$^3$.

Further, the heat-resistant resin composite according to the present invention preferably has a thickness of 0.3 mm or greater (preferably 0.5 mm or greater). The heat-resistant resin composite having too small thickness may not be desirable because such a heat-resistant resin composite may have a lower strength or an increased manufacturing cost. The heat-resistant resin composite according to the present invention may have a thickness of more preferably 0.7 mm or greater, and further preferably 1 mm or greater. The upper limit of the thickness can be appropriately set according to the thickness required for the resin composite and others, for example, may be about 10 mm.

Since the heat-resistant resin composite according to the present invention not only has both good mechanical properties and heat resistance, but also can be manufactured at a low cost without requiring a special process. The heat-resistant resin composite can be suitably used for housings for, for example, a personal computer, a display, an OA equipment, a mobile phone, a portable information terminal, a digital video camera, an optical equipment, an audio, an air conditioning, a lighting equipment, toy supplies, and other household appliances; electrical or electronics parts such as a tray, a chassis, an interior member, or a case thereof; civil engineering and construction parts such as post, panel, reinforcing material; automotive and motorcycle parts such as various members, various frames, various hinges, various arms, various axles, various wheel bearings, various beams, various pillars, various supports, various rails, body parts or outer plate, exterior parts such as a bumper, a mall, an undercover, an engine cover, a current plate, a spoiler, a cowl louver, and an aero part, interior parts such as an instrument panel, a seat frame, a door trim, a pillar trim, a steering wheel, and various module, motor parts, fuel-, exhaust- or intake-systems such as a CNG tank, a gasoline tank, a fuel pump, an air intake, an intake manifold, a carburetor main body, a carburetor spacer, various pipes, and various valve; aircraft parts such as a landing gear pod, a winglet, a spoiler, an edge, a rudder, an elevator, a failing, and a rib; and others.

EXAMPLES

Hereinafter, the present invention will be demonstrated by way of some examples that are presented only for the sake of illustration, which are not to be construed as limiting the scope of the present invention. It should be noted that physical properties of the Examples and Comparative Examples below were measured in the following manners.

[Glass transition temperature of heat-resistant thermoplastic fiber (°C)]

Using a solid dynamic viscoelasticity analyzer "Rheospectra DVE-V4" manufactured by Rheology Co., Ltd., glass transition temperature of fiber was determined by recording change in loss tangent (tan$\delta$) dependent on temperatures measured in an elevating temperature of 10°C/min. at a frequency of 10Hz, the glass transition temperature was evaluated from a temperature at the peak tan$\delta$.

[Average fineness (dtex)]

From multifilament samples, 100 filaments were selected at random and the single fiber fineness was measured for each of the selected samples to calculate the average fineness.

[Average fiber length (mm)]

From cut fiber samples, 100 cut fibers were selected at random and the fiber length was measured for each of the selected samples to calculate the average fiber length.

[Crystallization degree of polyester-based polymer]

The degree of crystallinity of PET-based polymer of binder fiber was determined by wide-angle X-ray diffraction method. That is, using X-ray generating apparatus (RAD-3A type) available from Rigaku Ltd., the scattered intensity of [010] with Cu-K$\alpha$ ray monochromatized with a nickel filter was measured to calculate the crystallinity by the following equation:

$$\text{(Degree of crystallinity: Xc)} = \text{(Scattering intensity of the crystal part)/(Total scattering intensity)} \times 100 \quad (\%)$$

[Intrinsic viscosity of polyester-based polymer]

The intrinsic viscosity of PET-based polymer of binder fiber was calculated from solution viscosity measured at 30°C, by measuring a polymer solution dissolved in a mixed solution of phenol/tetrachloroethane (weight ratio 1/1).

[Basis weight of the non-woven fabric (g/m$^2$)]

In accordance with JIS L 1913 test method, basis weight was measured and evaluated as average value of three samples (n = 3).

[Bending strength (MPa) and bending elastic modulus (GPa) of composite]

In accordance with ASTM790, bending strength and bending elastic modulus of the composite were measured at 24°C and 100°C.

(Reference Example 1)

(1) Polycondensation reaction was carried out by a conventional method at 280°C with a polymerization reactor at a copolymerization ratio of terephthalic acid and isophthalic acid (molar ratio) of 70/30 (in total 100 mol%), and 100 mol% of ethylene glycol to produce a PET-based polymer having an intrinsic viscosity ($\eta$) of 0.81. Thus produced polymer was extruded into water in strands from the bottom of the polymerization reactor and cut into pellets.

(2) The above-obtained PET-based polymer was supplied to a vented twin-screw extruder of co-rotating type heated at 270°C, introduced to a spinning head which was heated at 280°C via a retention time of 2 minutes, and then was discharged from a spinneret having round holes at a discharge rate of 45 g/min. to give spun filaments. Then the spun filaments were taken up at a spinning speed of 1200 m/min. to obtain multifilaments made of the PET-based polymer by itself having of 2640 dtex/1200 f. Then thus obtained filaments were cut into 10 mm in length.

Obtained filaments had a degree of crystallinity of 20%, an intrinsic viscosity of 0.8, and an average fineness of 2.2 dtex, and a circular cross-sectional shape.

(Example 1)

(1) Polyetherimide-based polymer (manufactured by SABIC, Innovative Plastics, "ULTEM9001") was dried under vacuum for 12 hours at 150°C.
(2) The dried polymer in the above (1) was discharged from a spinneret having round holes at a spinneret temperature of 390°C, at a discharge amount of 50 g/min. and at a spinning speed of 1500 m/min., to obtain multifilaments (2640 dtex/1200 f). Then, thus obtained filaments were cut into 10 mm in length.
(3) Appearance of the obtained filaments was good without fluff or the like. The fibers had an average single fiber fineness of 2.2 dtex, an average fiber length of 10.1 mm, and a glass transition temperature of 213°C.
(4) A slurry comprising 50 wt% of the PEI fibers obtained in the above (3), 47 wt% of glass fibers having a cut length of 15 mm (average fineness: 2.2 dtex, average fiber length: 15 mm), and 3 wt% of the PET-type binder fibers obtained in Reference Example 1 (average fiber length: 10 mm), each dispersed in water was subjected to wet papermaking, followed by hot-air drying at 100°C to obtain a paper having a basis weight of 500 g/m$^2$.
(5) After placing 6 sheets of the resulting paper (total basis weight = 3000 g/m$^2$) one over another, compression molding was carried out at 360°C which was a temperature at which all of the PEI fibers melted, under a pressure of 10N/mm$^2$ for 3 minutes to form a flat plate.
Thus obtained flat plate had a density of 1.68 g/cm$^3$ and a thickness of 1.5 mm.
(6) Appearance of the obtained flat plate was good. The bending strength and the bending elastic modulus at room temperature were 260 MPa and 12 GPa, respectively. The bending strength and the bending elastic modulus at 100°C were 220 MPa and 10 GPa, respectively. The retention percentages of the bending strength and the bending elastic modulus were 85% and 83%, respectively. Accordingly, the obtained flat plate achieved excellent heat resistance.

(Example 2)

Except for using PEI fibers having cut length of 3 mm (average fiber length = 3.2 mm) in Example 1 (2), a flat plate (density: 1.69 g/cm$^3$, thickness: 1.3 mm) was produced in the same manner as in Example 1. Appearance of the obtained flat plate was good. The bending strength and the bending elastic modulus at room temperature were 250 MPa and 12 GPa, respectively. The bending strength and the bending elastic modulus at 100°C were 215 MPa and 10 GPa, respectively. The retention percentages of the bending strength and the bending elastic modulus were 86% and 83%, respectively. Accordingly the obtained flat plate achieved excellent heat resistance.

(Example 3)

Except that the percentages of the PEI fibers (heat-resistant thermoplastic fibers) and the glass fibers (reinforcing fibers) were changed into 80 wt% and 17 wt%, respectively, in Example 1 (4), a flat plate (density: 1.41 g/cm$^3$, thickness: 1.5 mm) was produced in the same manner as in Example 1.
Appearance of the obtained flat plate was good. The bending strength and the bending elastic modulus at room temperature were 181 MPa and 8 GPa, respectively. The bending strength and the bending elastic modulus at 100°C were 157 MPa and 7 GPa, respectively. The retention percentages of the bending strength and the bending elastic modulus were 87% and 88%, respectively. Accordingly the obtained flat plate achieved excellent heat resistance.

(Example 4)

Except that PAN-based carbon fibers (manufactured by Toho Tenax Co., Ltd., average fiber diameter: 7 $\mu$m, average fiber length: 13 mm) having a cut length of 13 mm were used as the reinforcing fiber in Example 1 (4), a flat plate (density: 1.49 g/cm$^3$, thickness: 1.5 mm) was produced in the same manner as in Example 1.

Appearance of the flat plate was good. The bending strength and the bending elastic modulus at room temperature were 360 MPa and 22 GPa, respectively. The bending strength and the bending elastic modulus at 100°C were 318 MPa and 20 GPa, respectively. The retention percentages of the bending strength and the bending elastic modulus were 88% and 91%, respectively. Accordingly the obtained flat plate achieved excellent heat resistance.

(Example 5)

(1) A semi-aromatic polyamide-based polymer (manufactured by Kuraray Co., Ltd. "GENESTA PA9MT") was dried under vacuum for 12 hours at 80°C.
(2) The dried polymer in the above (1) was discharged from a spinneret having round holes at a spinneret temperature of 310°C at a discharge amount of 50 g/min. and at a spinning speed of 1500 m/min. to obtain multifilament. Then, thus obtained filaments were cut into 5 mm in length.
(3) Appearance of the obtained filaments was good without fluff or the like. The fibers had an average single fiber fineness of 0.7 dtex, an average fiber length of 5.2 mm, and a glass transition temperature of 121°C.
(4) A slurry comprising 60 wt% of the fibers (heat-resistant thermoplastic fibers) obtained in the above (3), 37 wt% of PAN-based carbon fibers having a cut length of 13 mm (average fiber diameter: 7 $\mu$m, average fiber length: 13 mm) and 3 wt% of the PET-type binder fibers obtained in Reference Example 1 (average fiber length: 10 mm), each dispersed in water was subjected to wet papermaking to obtain a paper having a basis weight of 500 g/m$^2$.
(5) After placing 6 sheets of the resulting paper (total basis weight = 3000 g/m$^2$) one over another, compression molding was carried out at 330°C which was a temperature at which all of the semi-aromatic polyamide-based polymer fibers melted, under a pressure of 10N/mm$^2$ for 5 minutes to form a flat plate.
Thus obtained flat plate had a density of 1.46 g/cm$^3$ and a thickness of 1.5 mm.
(6) Appearance of the flat plate obtained was good. The bending strength and the bending elastic modulus at room temperature were 372 MPa and 24 GPa, respectively. The bending strength and the bending elastic modulus at 100°C were 310 MPa and 21 GPa, respectively. The retention percentages of the bending strength and the bending elastic modulus were 83% and 88%, respectively. Accordingly, the obtained flat plate achieved excellent heat resistance.

(Example 6)

Except that 50 wt% of the heat-resistant thermoplastic fibers, 40 wt% of para-aramid fibers (Du Pont-Toray Co., Ltd., Kevlar; average fineness: 2.2 dtex, average fiber length: 13 mm) having a cut length of 13 mm as the reinforcing fiber, and 10 wt% of the PET-type binder fibers were used in Example 5 (4), a flat plate was produced in the same manner as in Example 5.
Thus obtained flat plate had a density of 1.31 g/cm$^3$ and a thickness of 1.5 mm.
Appearance of the flat plate was good. The bending strength and the bending elastic modulus at room temperature were 300 MPa and 18 GPa, respectively. The bending strength and the bending elastic modulus at 100°C were 226 MPa and 15 GPa, respectively. The retention percentages of the bending strength and the bending elastic modulus were 75% and 83%, respectively. Accordingly the obtained flat plate achieved excellent heat resistance.

(Example 7)

(1) PEEK-based polymer (manufactured by Victrex Corp. "90G") was dried under vacuum for 12 hours at 80°C.
(2) The dried polymer in the above (1) was discharged from a spinneret having round holes at a spinneret temperature of 400°C, at a discharge amount of 50 g/min. and at a spinning speed of 1500 m/min, to obtain multifilament. Then, thus obtained filaments were cut into 5 mm in length.
(3) Appearance of the obtained filaments was good without fluff or the like. The fibers had an average single fiber fineness of 8.8 dtex, an average fiber length of 5.1 mm, and a glass transition temperature of 146°C.
(4) A slurry comprising 50 wt% of the fibers (heat-resistant thermoplastic fibers) obtained in the above (3), 47 wt% of PAN-based carbon fibers having a cut length of 13 mm (average fiber diameter: 7 $\mu$m, average fiber length: 13 mm), and 3 wt% of the PET-type binder fibers obtained in Reference Example 1 (average fiber length: 10 mm), each dispersed in water was subjected to wet papermaking, followed by hot-air drying at 100°C to obtain a paper having a basis weight of 500 g/m$^2$.
(5) After placing 6 sheets of the resulting paper (total basis weight = 3000 g/m$^2$) one over another, compression molding was carried out at 430°C which was a temperature at which all of the PEEK-based polymer fibers melted, under a pressure of 10 N/mm$^2$ for 5 minutes to form a flat plate.

Thus obtained flat plate had a density of 1.50 g/cm$^3$ and a thickness of 1.5 mm.

(6) Appearance of the flat plate obtained was good. The bending strength and the bending elastic modulus at room temperature were 352 MPa and 22 GPa, respectively. The bending strength and the bending elastic modulus at 100°C were 275 MPa and 19 GPa, respectively. The retention percentages of the bending strength and the bending elastic modulus were 78% and 86%, respectively. Accordingly, the obtained flat plate achieved excellent heat resistance.

(Example 8)

(1) Except that 30 wt% of the heat-resistant thermoplastic fibers, 65 wt% of the reinforcing fibers, and 5 wt% of the PET-type binder fibers were used in Example 7 (4), a flat plate (density: 1.40 g/cm$^3$, thickness: 1.5 mm) was produced in the same manner as in Example 7.

Appearance of the flat plate was good. The bending strength and the bending elastic modulus at room temperature were 325 MPa and 20 GPa, respectively. The bending strength and the bending elastic modulus at 100°C were 235 MPa and 15 GPa, respectively. The retention percentages of the bending strength and the bending elastic modulus were 72% and 75%, respectively. Accordingly the obtained flat plate achieved excellent heat resistance.

(Example 9)

(1) Polycarbonate-based polymer (manufactured by SABIC, "PC FST") was dried under vacuum for 12 hours at 80°C.

(2) The dried polymer in the above (1) was discharged from a spinneret having round holes at a spinneret temperature of 300°C, at a discharge amount of 50 g/min. and at a spinning speed of 1500 m/min., to obtain multifilament. Then, thus obtained filaments were cut into 50 mm in length.

(3) Appearance of the obtained filaments was good without fluff or the like. The fibers had an average single fiber fineness of 2.2 dtex, an average fiber length of 50 mm, and a glass transition temperature of 132°C.

(4) Fiber blend comprising 65 wt% of the fibers (heat-resistant thermoplastic fibers) obtained in the above (3), 30 wt% of PAN-based carbon fibers having a cut length of 13 mm (average fiber diameter: 7 μm, average fiber length: 13 mm), and 5 wt% of the PET-type binder fibers obtained in Reference Example 1 (average fiber length: 20 mm) was subjected to air-laid forming, followed by heat-treating for 2 minutes in a hot air dryer at 180°C, to obtain an air-laid web having a basis weight of 100 g/m$^2$.

(5) After placing 30 sheets of the resulting web (total basis weight = 3000 g/m$^2$) one over another, compression molding was carried out at 330°C which was a temperature at which all of the PC-based polymer fibers melted so as to form a flat plate.

Thus obtained flat plate had a density of 1.37 g/cm$^3$ and a thickness of 1.5 mm.

(6) Appearance of the flat plate obtained was good. The bending strength and the bending elastic modulus at room temperature were 220 MPa and 18 GPa, respectively. The bending strength and the bending elastic modulus at 100°C were 162 MPa and 16 GPa, respectively. The retention percentages of the bending strength and the bending elastic modulus were 74% and 89%, respectively. Accordingly, the obtained flat plate achieved excellent heat resistance.

(Comparative Example 1)

(1) A slurry comprising 50 wt% of PET fibers (thermoplastic fibers) having an average fineness of 2.2 dtex, an average fiber length of 10.3 mm and a glass transition temperature of 75°C (manufactured by Kuraray Co., Ltd., "N701Y"), 47 wt% of PAN-based carbon fibers having a cut length of 13 mm (average fiber diameter: 7 μm, average fiber length: 13 mm) and 3 wt% of the PET-type binder fibers obtained in Reference Example 1 (average fiber length 10 mm), each dispersed in water was subjected to wet papermaking, followed by hot-air drying at 100°C to obtain a paper having a basis weight of 500 g/m$^2$.

(2) After placing 6 sheets of the resulting paper (total basis weight = 3000 g/m$^2$) one over another, compression molding was carried out at 200°C which was a temperature at which all of the PET fibers melted under a pressure of 10 N/mm$^2$ for 5 minutes to form a flat plate.

Thus obtained flat plate had a density of 1.39 g/cm$^3$ and a thickness of 1.5 mm.

(3) Appearance of the obtained flat plate was good. The bending strength and the bending elastic modulus at room temperature were 200 MPa and 20 GPa, respectively. However, the bending properties largely deteriorated around 75 °C which was a glass transition temperature of the thermoplastic fibers, and the bending strength and the bending elastic modulus at 100°C were 50 MPa and 4 GPa, respectively. The retention percentages of the bending strength and the bending elastic modulus were 25% and 20%, respectively. Accordingly the obtained flat plate showed inferior heat resistance.

(Comparative Example 2)

(1) Except that the fiber blend ratio in Example 1 (4) was changed into 10 wt% of the PEI fibers (heat-resistant thermoplastic fibers), 80 wt% of the glass fibers (reinforcing fibers), and 10 wt% of the PET-based binder fibers, a flat plate (density: 2.01 g/cm$^3$, thickness: 1.3 mm) was obtained in the same manner as Example 1. Appearance of the flat plate was good. The bending strength and the bending elastic modulus at room temperature were 120 MPa and 8 GPa, respectively. The bending strength and the bending elastic modulus at 100°C were 60 MPa and 5 GPa, respectively. The retention percentages of the bending strength and the bending elastic modulus were 50% and 63%, respectively. Accordingly the obtained flat plate showed inferior heat resistance. It was considered to be caused because of the small amount of the thermoplastic resin occupying the molded article, resulting in poor impregnation.

(Comparative Example 3)

(1) Except for changing the average fineness of the heat-resistant thermoplastic fibers in Example 1 (3) into 20 dtex, a wet papermaking was attempted in the same manner as in Example 1. However, because of too large fineness of the heat-resistant thermoplastic fibers, the number of heat-resistant thermoplastic fibers constituting the non-woven fabric was too small, resulting in obtaining too coarse non-woven fabric. Therefore, the dispersion of the glass fibers in the papermaking process was poor. Further glass fibers dropped or disassociated out of voids or gaps of the non-woven fabric. As a result, the processability of this fabric was very poor, and could not fabricate a non-woven fabric with good reproducibility.

(Comparative Example 4)

(1) Except for changing the average fiber length of the heat-resistant thermoplastic fibers in Example 1 (3) into 70.8 mm, a wet papermaking was attempted in the same manner as in Example 1. However, because of too long length of the heat-resistant thermoplastic fibers, the heat-resistant thermoplastic fibers were entangled and the dispersion of the glass fibers was poor. The processability of this fabric was very poor, and could not fabricate a non-woven fabric with good reproducibility.

(Comparative Example 5)

(1) Except for changing the binder fibers in Example 1 into PVA-based binder fibers (manufactured by Kuraray Co., Ltd., "SPG05611"), a flat plate was obtained in the same manner as in Example 1. However, there were many bubbles in the flat plate. Presuming from a smell during thermo-forming, PVA-based fibers were decomposed and generated gas in the heat compression at a high temperature, resulting in poor appearance. As a result, the bending strength and the bending elastic modulus at room temperature were 220 MPa and 9 GPa, respectively. The bending strength and the bending elastic modulus at 100°C were 150 MPa and 6 GPa, respectively. The retention percentages of the bending strength and the bending elastic modulus were 68% and 67%, respectively. The obtained flat plate showed inferior heat resistance.

(Comparative Example 6)

(1) Except for changing the binder fibers in Example 1 into PE-based binder fibers, a flat plate (density: 1.29 g/cm$^3$, thickness: 1.5 mm) was obtained in the same manner as in Example 1. Appearance of the flat plate was good. The bending strength and the bending elastic modulus at room temperature were 200 MPa and 8 GPa, respectively. However, the bending strength and the bending elastic modulus at 100°C were 100 MPa and 4 GPa, respectively. The retention percentages of the bending strength and the bending elastic modulus were 50% and 50%, respectively. Accordingly, the obtained flat plate showed inferior heat resistance.

[Table 1]

| | Blended-fiber non-woven fabric | | | | | | | | | | | Molded body | | | | | |
| | Non-woven fabric specs | | Thermoplastic fiber | | | | | Reinforcing fiber | | Binder fiber | | Bending strength | | | Bending elastic modulus | | |
| | Process | Basis weight (g/m²) | Category | Prop. (wt%) | Tg (°C) | Avr. fineness (dtex) | Avr. length (mm) | Category | Prop. (wt%) | Category | Prop. (wt%) | RT (MPa) | 100°C (MPa) | Reten. (%) | RT (MPa) | 100°C (MPa) | Reten. (%) |
|---|---|---|---|---|---|---|---|---|---|---|---|---|---|---|---|---|---|
| Ex. 1 | wet | 500 | PEI | 50 | 213 | 2.2 | 10.1 | Glass fiber | 47 | PET | 3 | 260 | 220 | 85 | 12 | 10 | 83 |
| Ex. 2 | wet | 500 | PEI | 50 | 213 | 2.2 | 3.2 | Glass fiber | 47 | PET | 3 | 250 | 215 | 86 | 12 | 10 | 83 |
| Ex. 3 | wet | 500 | PEI | 80 | 213 | 2.2 | 10.1 | Glass fiber | 17 | PET | 3 | 181 | 157 | 87 | 8 | 7 | 88 |
| Ex. 4 | wet | 500 | PEI | 50 | 213 | 2.2 | 10.1 | Carbon fiber | 47 | PET | 3 | 360 | 318 | 88 | 22 | 20 | 91 |
| Ex. 5 | wet | 500 | PA9MT | 60 | 121 | 0.7 | 5.2 | Carbon fiber | 37 | PET | 3 | 372 | 310 | 83 | 24 | 21 | 88 |
| Ex. 6 | wet | 500 | PA9MT | 50 | 121 | 0.7 | 5.2 | Aramid fiber | 40 | PET | 10 | 300 | 226 | 75 | 18 | 15 | 83 |
| Ex. 7 | wet | 500 | PEEK | 50 | 146 | 8.8 | 5.1 | Carbon fiber | 47 | PET | 3 | 352 | 275 | 78 | 22 | 19 | 86 |
| Ex. 8 | wet | 500 | PEEK | 30 | 146 | 8.8 | 5.1 | Carbon fiber | 65 | PET | 5 | 325 | 235 | 72 | 20 | 15 | 75 |
| Ex. 9 | dry | 500 | PC | 65 | 132 | 2.2 | 50 | Carbon fiber | 30 | PET | 5 | 220 | 162 | 74 | 18 | 16 | 89 |

[Table 2]

| | Blended-fiber non-woven fabric | | | | | | | | | | | Molded body | | | | | |
| | Non-woven fabric specs | | Thermoplastic fiber | | | | | Reinforcing fiber | | Binder fiber | | Bending strength | | | Bending elastic modulus | | |
| | Process | Basis weight (g/m²) | Category | Prop. (wt%) | Tg (°C) | Avr. fineness (dtex) | Avr. length (mm) | Category | Prop. (wt%) | Category | Prop. (wt%) | RT (MPa) | 100°C (MPa) | Reten. (%) | RT (MPa) | 100°C (MPa) | Reten. (%) |
|---|---|---|---|---|---|---|---|---|---|---|---|---|---|---|---|---|---|
| Com Ex. 1 | wet | 500 | PET | 50 | 75 | 2.2 | 10.3 | Carbon fiber | 47 | PET | 3 | 200 | 50 | 25 | 20 | 4 | 20 |
| Com Ex. 2 | wet | 500 | PEI | 10 | 213 | 2.2 | 10.1 | Glass fiber | 80 | PET | 10 | 120 | 60 | 50 | 8 | 5 | 63 |
| Com. Ex. 3 | wet | - | PEI | 50 | 213 | 20 | 10.1 | Glass fiber | 47 | PET | 3 | - | - | - | - | - | - |
| Com. Ex. 4 | wet | - | PEI | 50 | 213 | 2.2 | 70.8 | Glass fiber | 47 | PET | 3 | - | - | - | - | - | - |
| Com Ex. 5 | wet | 500 | PEI | 50 | 213 | 2.2 | 10.1 | Glass fiber | 47 | PVA | 3 | 220 | 150 | 68 | 9 | 6 | 67 |
| Com Ex. 6 | wet | 500 | PEI | 50 | 213 | 2.2 | 10.1 | Glass fiber | 47 | PE | 3 | 200 | 100 | 50 | 8 | 4 | 50 |

EP 2 881 421 B1

Examples 1 to 9 in Table 1 reveal that the heat-resistant resin composites formed from non-woven fabrics comprising heat-resistant thermoplastic fibers having a glass transition temperature of 100°C or higher and reinforcing fibers in a specific ratio, can achieve not only excellent bending properties, but also excellent heat resistance.

On the other hand, as is clear from the results in Table 2, in Comparative Example 1 since the heat-resistant thermoplastic fibers constituting the non-woven fabric have a glass transition temperature of lower than 100°C, the bending strength and bending elastic modulus at room temperature are in the range of no problem. But the bending strength and the bending elastic modulus greatly reduce at 100°C.

Further, even by using the fibers having a glass transition temperature of greater than 100°C, Comparative Example 2 having a small ratio of the heat-resistant thermoplastic resin with respective to the reinforcing fibers shows a reduced bending strength at room temperature, and further cannot retain the bending strength and the bending elastic modulus at 100°C.

Furthermore, when the average fineness and the average fiber length of the heat-resistant thermoplastic fibers are large values (Comparative Example 3 and 4), the processability are deteriorated significantly and cannot obtain non-woven fabrics with high reproducibility.

Moreover, in Comparative Example 5 using as the binder fibers PVA fibers causing thermal decomposition at the thermal bonding temperature, the bending strength and the bending elastic modulus at room temperature are low as compared to those in Example 1. Further Comparative Example 5 cannot retain the bending strength and the bending elastic modulus at 100°C.

Also in Comparative Example 6 using as the binder fibers PE fibers having inferior heat resistance to PET binder fibers, the bending strength and the bending elastic modulus at room temperature are low as compared to those in Example 1. Further Comparative Example 6 cannot retain the bending strength and the bending elastic modulus at 100°C.

INDUSTRIAL APPLICABILITY

According to the present invention, it is possible to provide a heat-resistant resin composite having good mechanical properties as well as heat resistance, in particular being capable of using for applications with many opportunities to be exposed to a high temperature environment. Further, the heat-resistant resin composite according to the present invention does not require special thermo-forming process, and can be produced at low cost using usual thermo-forming process such as compression molding and GMT molding. Further, the shape of the heat-resistant resin composite can be freely designed depending on the purpose. Such heat-resistant resin composites can be effectively applicable to various applications including general industrial materials, electrical and electronic fields, civil engineering and construction fields, aircraft, automotive, rail, and marine fields, agricultural material fields, optical material fields, medical fields and others.

Preferred embodiments of the present invention are shown and described.

**Claims**

1.  A heat-resistant resin composite comprising a matrix resin and reinforcing fibers dispersed in the matrix resin, wherein the matrix resin comprises a heat-resistant thermoplastic polymer and a polyester-based polymer, the heat-resistant thermoplastic polymer having a glass transition temperature of 100°C or higher, and the polyester-based polymer comprising a terephthalic acid unit (A) and an isophthalic acid unit (B) in a copolymerization ratio (molar ratio) of (A)/(B) = 90/10 to 40/60; and

    the heat-resistant resin composite comprises the heat-resistant thermoplastic polymer in a proportion of 30 to 80 wt% based on the composite.

2.  The heat-resistant resin composite according to claim 1, wherein
    the composite has a bending strength at 24°C of at 150 MPa or greater; and
    a retention percentage of a bending strength of the composite at 100°C with respect to that of 24°C is equal to or greater than 70%.

3.  The heat-resistant resin composite according to claim 1 or 2, wherein
    the composite has a bending elastic modulus at 24°C of 5 GPa or greater and
    a retention percentage of a bending elastic modulus thereof at 100°C with respect to that at 24°C is equal to or greater than 70%.

4.  The heat-resistant resin composite according to any one of claims 1 to 3, wherein the composite has a density of

2.00 g/cm$^3$ or less, and a thickness of 0.3 mm or greater.

5. A non-woven fabric used for producing a heat-resistant resin composite according to any one of claims 1 to 4, wherein the non-woven fabric comprises a heat-resistant thermoplastic fiber, a reinforcing fiber, and a polyester-based binder fiber to bind other fibers;
the heat-resistant thermoplastic fiber has a glass transition temperature of 100°C or higher, an average fineness of 0.1 to 10 dtex, and an average fiber length of 0.5 to 60 mm;
the polyester-based binder fiber comprises a polyester-based polymer comprising a terephthalic acid unit (A) and an isophthalic acid unit (B) in a copolymerization ratio (molar ratio) of (A)/(B) = 90/10 to 40/60; and
the proportion of the heat-resistant thermoplastic fiber in the non-woven fabric is from 30 to 80 wt%.

6. The non-woven fabric according to claim 5, wherein the polyester-based binder fiber has a degree of crystallinity of 50% or less.

7. The non-woven fabric according to claim 5 or 6, wherein a ratio (by weight) of the heat-resistant thermoplastic fiber with respect to the polyester-based binder fiber in the heat-resistant resin composite is (former/latter) = 60/40 to 99/1.

8. The non-woven fabric according to any one of claims 5 to 7, wherein the heat-resistant thermoplastic fiber is an undrawn fiber being substantially undrawn after spinning.

9. The non-woven fabric according to any one of claims 5 to 8, wherein the heat resistant thermoplastic fiber comprises at least one member selected from the group consisting of a polyetherimide-based fiber, a semi-aromatic polyamide-based fiber, a polyether ether ketone-based fiber, and a polycarbonate-based fiber.

10. The non-woven fabric according to any one of claims 5 to 9, wherein the reinforcing fiber comprises at least one member selected from the group consisting of a carbon fiber, a glass fiber, a wholly aromatic polyester fiber, and a para-aramid fiber.

11. The non-woven fabric according to any one of claims 5 to 10, wherein the non-woven fabric has a basis weight of 5 to 1500 g/m$^2$.

12. A method for producing a heat-resistant resin composite at least comprising:

preparing one or more of the non-woven fabrics recited in any one of claims 5 to 11 to be overlaid with each other, and
thermo-compressing one or more of the non-woven fabrics at a temperature of equal to or higher than a flow starting temperature of the heat-resistant thermoplastic fiber to carry out thermo-forming.

**Patentansprüche**

1. Hitzebeständiger Harzverbundwerkstoff, der ein Matrixharz und Verstärkungsfasern aufweist, die im Matrixharz dispergiert sind, wobei
das Matrixharz ein hitzebeständiges thermoplastisches Polymer und ein polyesterbasiertes Polymer aufweist, wobei
das hitzebeständige thermoplastische Polymer eine Glasübergangstemperatur von 100°C oder mehr aufweist und
das polyesterbasierte Polymer eine Terephthalsäureeinheit (A) und eine Isophthalsäureeinheit (B) in einem Copolymerisationsverhältnis (Molverhältnis) (A)/(B) = 90/10 bis 40/60 aufweist; und
der hitzebeständige Harzverbundwerkstoff beruhend auf dem Verbundwerkstoff das hitzebeständige thermoplastische Polymer in einem Anteil von 30 bis 80 Gew.-% aufweist.

2. Hitzebeständiger Harzverbundwerkstoff nach Anspruch 1, wobei
der Verbundwerkstoff bei 24°C eine Biegefestigkeit von 150 MPa oder mehr aufweist; und ein Beibehaltungsprozentsatz einer Biegefestigkeit des Verbundwerkstoffs bei 100°C in Bezug auf dem bei 24°C gleich oder größer als 70% ist.

3. Hitzebeständiger Harzverbundwerkstoff nach Anspruch 1 oder 2, wobei
der Verbundwerkstoff bei 24°C ein Biegeelastizitätsmodul von 5 GPa oder mehr aufweist, und ein Beibehaltungsprozentsatz seines Biegeelastizitätsmoduls bei 100°C in Bezug auf dem bei 24°C gleich oder größer als 70% ist.

**4.** Hitzebeständiger Harzverbundwerkstoff nach einem der Ansprüche 1 bis 3, wobei der Verbundwerkstoff eine Dichte von 2,00 g/cm$^3$ oder weniger und eine Dicke von 0,3 mm oder mehr aufweist.

**5.** Faservlies, das zum Herstellen eines hitzebeständigen Harzverbundwerkstoffs nach einem der Ansprüche 1 bis 4 verwendet wird, wobei
das Faservlies eine hitzebeständige thermoplastische Faser, eine Verstärkungsfaser und eine polyesterbasierte Bindefaser aufweist, um andere Fasern zu binden;
die hitzebeständige thermoplastische Faser eine Glasübergangstemperatur von 100°C oder mehr, eine durchschnittliche Feinheit von 0,1 bis 10 dtex und eine durchschnittliche Faserlänge von 0,5 bis 60 mm aufweist;
die polyesterbasierte Bindefaser ein polyesterbasiertes Polymer aufweist, das eine Terephthalsäureeinheit (A) und eine Isophthalsäureeinheit (B) in einem Copolymerisationsverhältnis (Molverhältnis) (A)/(B) = 90/10 bis 40/60 aufweist; und
der Anteil der hitzebeständigen thermoplastischen Faser im Faservlies von 30 bis 80 Gew.-% beträgt.

**6.** Faservlies nach Anspruch 5, wobei die polyesterbasierte Bindefaser einen Kristallinisationsgrad von 50% oder weniger aufweist.

**7.** Faservlies nach Anspruch 5 oder 6, wobei ein (Gewichts-) Verhältnis der hitzebeständigen thermoplastischen Faser in Bezug auf die polyesterbasierte Bindefaser im hitzebeständigen Harzverbundwerkstoff (erstgenannte/letztgenannte) = 60/40 bis 99/1 beträgt.

**8.** Faservlies nach einem der Ansprüche 5 bis 7, wobei die hitzebeständige thermoplastische Faser eine unverstreckte Faser ist, die im Wesentlichen nach dem Verspinnen unverstreckt ist.

**9.** Faservlies nach einem der Ansprüche 5 bis 8, wobei die hitzebeständige thermoplastische Faser mindestens ein Element aufweist, das aus der Gruppe ausgewählt ist, die aus einer polyetherimidbasierten Faser, ein halbaromatischen polyamidbasierten Faser, einer polyetheretherketonbasierten Faser und einer polycarbonatbasierten Faser besteht.

**10.** Faservlies nach einem der Ansprüche 5 bis 9, wobei die Verstärkungsfaser mindestens ein Element aufweist, das aus der Gruppe ausgewählt ist, die aus einer Karbonfaser, einer Glasfaser, einer völlig aromatischen Polyesterfaser, und ein para-Aramid-Faser besteht.

**11.** Faservlies nach einem der Ansprüche 5 bis 10, wobei das Faservlies ein Flächengewicht von 5 bis 1500 g/m$^2$ aufweist.

**12.** Verfahren zum Herstellen eines hitzebeständigen Harzverbundwerkstoffs, das mindestens aufweist:

Vorbereiten von einem oder mehreren der Faservliese nach einem der Ansprüche 5 bis 11, die aufeinander gelegt werden sollen, und
Thermokomprimieren von einem oder mehreren der Faservliese bei einer Temperatur gleich oder höher als eine Fließanfangstemperatur der hitzebeständigen thermoplastischen Faser, um ein Thermoformen auszuführen.

## Revendications

**1.** Matériau composite en résine résistant à la chaleur comprenant une résine matricielle et des fibres de renforcement dispersées dans la résine matricielle, où
la résine matricielle comprend un polymère thermoplastique résistant à la chaleur et un polymère de polyester, le polymère thermoplastique résistant à la chaleur ayant un point de transition vitreuse égal ou supérieur à 100° C, et
le polymère de polyester comprenant une unité d'acide téréphtalique (A) et une unité d'acide isophtalique (B) suivant un rapport de copolymérisation (rapport molaire de (A)/(B) = de 90/10 à 40/60 ; et où
ledit matériau composite en résine résistant à la chaleur comprend le polymère thermoplastique résistant à la chaleur en proportion de 30 à 80 % en poids du matériau composite.

**2.** Matériau composite en résine résistant à la chaleur selon la revendication 1, où
ledit matériau composite a une résistance à la flexion à 24° C égale ou supérieure à 150 MPa ; et

le pourcentage de conservation de la résistance à la flexion du matériau composite à 100° C par rapport à celui à 24° C est égal ou supérieur à 70 %.

3. Matériau composite en résine résistant à la chaleur selon la revendication 1 ou la revendication 2, où ledit matériau composite a un module d'élasticité en flexion à 24° C égal ou supérieur à 5 GPa, et où le pourcentage de conservation du module d'élasticité en flexion dudit matériau à 100° C par rapport à celui à 24° C est égal ou supérieur à 70 %.

4. Matériau composite en résine résistant à la chaleur selon l'une des revendications 1 à 3, où ledit matériau composite a une densité égale ou inférieure à 2,00 g/cm$^3$, et une épaisseur égale ou supérieure à 0,3 mm.

5. Tissu non tissé utilisé pour produire un matériau composite en résine résistant à la chaleur selon l'une des revendications 1 à 4, où
ledit tissu non tissé comprend une fibre thermoplastique résistante à la chaleur, une fibre de renforcement, et une fibre de liaison à base polyester pour lier les autres fibres ;
la fibre thermoplastique résistante à la chaleur a un point de transition vitreuse égal ou supérieur à 100° C, une finesse moyenne de 0,1 à 10 dtex, et une longueur de fibre moyenne de 0,5 à 60 mm ;
la fibre de liaison à base polyester comprend un polymère de polyester comprenant a unité d'acide téréphtalique (A) et une unité d'acide isophtalique (B) suivant un rapport de copolymérisation (rapport molaire de (A)/(B) = de 90/10 à 40/60 ; et
la proportion de la fibre thermoplastique résistante à la chaleur dans le tissu non tissé est comprise entre 30 et 80 % en poids.

6. Tissu non tissé selon la revendication 5, où la fibre de liaison à base polyester a un degré de cristallinité égal ou inférieur à 50 %.

7. Tissu non tissé selon la revendication 5 ou la revendication 6, où le rapport (en poids) entre la fibre thermoplastique résistante à la chaleur et la fibre de liaison à base polyester dans le matériau composite en résine résistant à la chaleur est compris entre 60/40 et 99/1 (avant/après).

8. Tissu non tissé selon l'une des revendications 5 à 7, où la fibre thermoplastique résistante à la chaleur est une fibre non étirée essentiellement non étirée après filature.

9. Tissu non tissé selon l'une des revendications 5 à 8, où la fibre thermoplastique résistante à la chaleur comprend au moins un élément sélectionné dans le groupe composé d'une fibre à base polyétherimide, une fibre à base polyamide semi-aromatique, une fibre à base polyéther éther cétone et une fibre à base polycarbonate.

10. Tissu non tissé selon l'une des revendications 5 à 9, où la fibre de renforcement comprend au moins un élément sélectionné dans le groupe composé d'une fibre de carbone, une fibre de verre, une fibre de polyester entièrement aromatique et une fibre para-aramide.

11. Tissu non tissé selon l'une des revendications 5 à 10, où ledit tissu non tissé a un poids de base compris entre 5 et 1500 g/m$^2$.

12. Procédé de production d'un matériau composite en résine résistant à la chaleur comprenant au moins :

la préparation d'un ou de plusieurs tissus non tissés selon l'une des revendications 5 à 11 pour les superposer l'un à l'autre, et
la thermocompression d'un ou de plusieurs tissus non tissés à une température égale ou supérieure à une température de début d'écoulement de la fibre thermoplastique résistante à la chaleur pour exécuter un thermoformage.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 61130345 A
- JP 6107808 A
- JP 3025537 A
- WO 2007097436 A
- JP 2006524755 A